# EUROPEAN PATENT SPECIFICATION

(11) **EP 1 111 406 B1**
(45) Date of publication and mention of the grant of the patent: **22.12.2004**
(21) Application number: 00969049.6
(22) Date of filing: 26.04.2000
(51) Int. Cl.: G01T 1/00, G01J 5/24, G01J 1/44

(54) **RADIATION DETECTOR**
STRAHLUNGSNACHWEISGERÄT
DETECTEUR DE RAYONNEMENTS

(30) Priority: 26.04.1999 BY 990390
(43) Date of publication of application: 27.06.2001
(73) Proprietor: SV Group S.R.O., 03861 Vritky (SK)
(72) Inventor: Danilov, Vyacheslav Alexandrovich, Minsk, 220050 (BY); Kozus, Viktor Ivanovich, Minsk, 220050 (BY)
(74) Representative: Viering, Jentschura & Partner
(86) International application number: PCT/EA2000/000002
(87) International publication number: WO 2000/068709

(56) References cited:
- EP-A- 0 675 345
- JP-A- 10 185 681
- SU-A1- 532 016
- SU-A1- 715 944
- SU-A1- 1 662 215
- US-A- 4 190 337

## Description

The apparatus being provided pertains to the field of engineering physics, in particular, to the radiation detection technique and can be used for photometry, dosimetry and also for measurements of the space-energy characteristics of optical and ionizing-radiation fields. The radiation detector used in optical radiation detection and photometry application is known [1]. The detector comprises a photodiode placed either in parallel with a load or connected in series with a bias voltage source and with a load in the simplified case [1]. A current or charge-amplifier input circuit is conventionally used therein as a load. One-dimensional and two-dimensional photodiode and phototransistor arrays [2,3], as well as image detectors based on the charge-coupled devices (CCD) [4] are also known. Said devices detect space-energy characteristics of optical radiation fields. The ionizing radiation detectors used for detection dosimetry and spectrometry of nuclear radiation are known [5]. The construction of said detectors is similar to that of optical radiation detectors, in which ionization chambers, proportional counters, semiconductor sensors, scintillation counters or photodiodes paired with scintillators are used instead photodiodes [5]. Ionizing-radiation coordinate-sensitive detectors (IRCSD) for making one-dimensional and two-dimensional coordinate analysis are known and used in the nuclear experiment techniques for detecting elementary particle traces and measuring a spatial distribution of a nuclear particle flow [6,7]. Said detectors make up either a system of wire electrodes disposed in a common gas volume or a system of strip electrodes sputtered on a silicon crystal surface and coupled with the electronics for reading the coordinate information.

Of conventional radiation detectors, the detector described in [1] is most similar to the detector being provided by the engineering nature thereof. Said detector comprises a photodiode, placed in parallel with the load or connected in series with the load or the bias-voltage source. In this case, the dc current or charge-amplifier input circuit serves as the load. Said detector is intended to detect an optical radiation and may be used to detect an ionizing radiation by coupling the photodiode with a scintillator. A low sensitivity resulting from the noises and zero drift of the dc amplifier used as the detector load is a disadvantage of said detector.

Document EP-A-0 675 345 discloses in the description of the prior art a detector comprising a photodiode, an interrogation pulse generator and a transistor. The quantity of light incident on the photodiode is determined by measuring the potential at the photodiode after applying a pulse or by measuring the integrated quantity of current flowing onto the photodiode during the interrogation pulse period. The circuit described in EP-A-0 675 345 requires an external voltage source providing the current flowing into the circuit during the application of the interrogation pulse.

The subject-matter of the first variant of the invention being claimed is that in the radiation detector comprising a series-connected photodiode and a load, with the load being coupled with the photodiode through a signal contact and at the other side being connected to a common bus; a transistor and an interrogation pulse generator are additionally incorporated, with the second photodiode electrode being coupled with the first electrode of the transistor, the control electrode of which is coupled with the interrogation pulse generator output, and the third transistor electrode is coupled with the common bus. In addition, N groups of elements, each consisting of the series-connected photodiode and transistor, are placed in parallel with the load, and the interrogation pulse generator comprises N outputs, each being coupled with the transistor control electrode from the respective element groups, where N is an integer > 1. Alternatively, the detector may comprise L loads, with the Nᵢ groups of elements being placed in parallel with each i-th load, and the total number of groups of elements in the detector being equal to the number N of outputs of the interrogation pulse generator, where L is an integer >1 and Nᵢ is a positive integer. Additionally, capacitors are placed in parallel with photodiodes.

The subject-matter of the second variant of the invention being claimed is that the radiation detector comprising a radiation sensitive element and the load, with the sensitive element connected at one side to a voltage supply bus and the load being connected at one side to a common bus, additionally comprises a switching-type transistor, a capacitor and an interrogation pulse generator, with the sensitive element being connected at the other side to the first transistor electrode and the first plate of the capacitor, the second plate of which is connected to the load signal contact, and the output of interrogation pulse generator being connected to the control electrode of the transistor, the third electrode of which is connected to the common bus. Besides, N groups of elements is connected between the supply voltage bus and the common bus, and each group comprises the series-connected radiation sensitive element and the transistor, the common point of which is coupled with the load signal contact though the capacitor, and the interrogation pulse generator comprises N outputs, each being connected to the transistor control electrode from the respective group of elements, where N is an integer > 1. Additionally, the detector may comprise L loads, with the signal contact of each i-th load being connected to Nᵢ groups of elements, and the total number of groups of elements in the detector equals the N number of interrogation pulse generator outputs, where L is an integer >1, and Nᵢ is a positive integer. In addition, a resistor is connected between the sensitive element and the common point of the switching-type transistor and capacitor.

The subject-matter of the third variant of the invention being claimed is that the radiation detector comprising a radiation sensitive element and a load, with the sensitive element being connected at one side to a supply voltage bus and the load being connected at one side to a common bus, additionally comprises a transistor and an interrogation pulse generator, with the sensitive element being connected at the other side to the first transistor electrode, the output of the interrogation pulse generator being connected with the control electrode of the transistor, the third electrode of which is connected to the load signal contact. In addition, a capacitor is connected between the first transistor electrode and common bus, and a resistor is connected between the first transistor electrode and the sensitive element.

The object of the invention being claimed is to increase sensitivity and accuracy in detecting radiation intensity and also to expand a dynamic range of radiation intensities to be detected.

The accuracy and sensitivity in measuring the radiation intensity in the first variant of the invention being claimed comprising a series-connected photodiode and a load as in prior art is increased by incorporating additionally a switching-type transistor and an interrogation pulse generator into the detector, with the respective connections of said elements to the other detector elements being provided. As a result, a photodiode photocurrent is converted from the direct photocurrent to the pulse photocurrent, which small quantity can be measured at a higher accuracy due to the fact that the current amplifies and charge pulse amplifiers do not comprise low-frequency noise components, such as flicker and zero drift, that are characteristic of dc current amplifiers. Placing N groups of elements consisting of a transistor and a photodiode coupled with N outputs of the interrogation pulse generator in parallel with the load provides a new quality to the radiation detector, i.e. a capability of analyzing the spatial distribution of intensity of the to-be-detected radiation. In comparison with the conventional one-dimensional photodiode strips [3] the variant being claimed allows for achieving a wider dynamic range of radiation intensities to be detected. This is conditioned by the fact that the dynamic range determined as the ratio of the maximum registered radiation intensity to the minimum one is defined by the range of an electric charge integrated at the photodiode capacitance and by the integrating period range of said charge. The range of the charge integrated at the photodiode capacitance is determined as the ratio of a maximum value of the integrated charge to the noise charge of the amplifier detecting said charge. All other factors being equal, the range of the charge integrated at the photodiode capacitance is directly proportional to the square root of the capacitance value thereof, since the maximum value of the charge integrated at the photodiode increases in direct proportion to the capacitance value thereof, while the value of the noise charge of the amplifier increases in direct proportion only to the square root of the capacitance value at the input thereof [5]. The period range of photocurrent integrating at the photodiode capacitance in its turn is determined by the ratio of the maximum value thereof to the minimum one. The maximum duration of the photocurrent-integrating period is determined by the leakage resistance of the photodiode, transistor and circuit board insulation and increases directly with the increase in the total capacitance of the photodiode and switching-type transistor. The minimum duration of the photocurrent-integrating period is determined by the time constant of the total capacitance discharge of the photodiode and switching-type transistor during the process of forming of an integrated discharge readout signal. The duration of said time constant is directly proportional to the total capacitance of the photodiode and switching-type transistor and to the switch-on resistance of the switching-type transistor. Therefore, the larger the capacitance of the photodiode and the charge leakage resistance therefrom, as well as the lower the switch-on resistance of the switching-type transistor, the more extensive the dynamic range of radiation intensities to be detected. The variant being claimed is characterized in that both field-effect transistors similar to the conventional photodiode strips and bipolar transistors may be used as the detector switching-type transistors. Using bipolar transistors, the steepness of which exceeds hundreds of times that of filed-effect transistors, as switching-type transistors of the detector being claimed allows the switch-on resistance of the switching-type transistor to be decreased hundreds-fold and, respectively, the dynamic range of to-be-detected radiation intensities to be expanded hundreds-fold. To produce the preset dynamic range of the radiation intensities to be detected, the capacitors of the required capacitance are placed in parallel with the photodiodes. To reduce the amplifier noises, the detector may contain L loads.

Increasing sensitivity and accuracy in detecting the radiation intensity in the second variant of the invention being claimed including a radiation-sensitive element and a load like in the prior art is attained by additionally incorporating a transistor and an interrogation pulse generator into the detector, with the respective connections of said elements to the other detector elements being provided. Connecting N groups of elements consisting of the switching-type transistor, a radiation-sensitive element and a capacitor, which are connected to the N outputs of the interrogation pulse generator, between the supply voltage bus and common bus provides a new quality to the radiation detector, i.e. a capability of analyzing the intensity spatial distribution of the radiation to be detected. The second variant of the detector being claimed (like the first variant) allows for achieving a more extensive dynamic range of radiation intensities to be detected, compared with the conventional one-dimensional photodiode strips, as well as allows for using radiation-sensitive elements such as proportional counters, ionizing chambers, photoresistors, etc. requiring high supply voltage and, as a result, expanding the range of possible detector applications. The increase in sensitivity and accuracy in detecting the radiation, as well as the expansion of the dynamic range of the radiation intensities to be detected is achieved in the second variant being claimed due to the action of factors leading to attaining similar technical results in the first variant being claimed. To reduce amplifier noises, the detector may contain L loads.

Increasing sensitivity an accuracy in detecting the radiation intensity in the third variant of the invention being claimed including a radiation-sensitive element and a load like in the prior art is attained by additionally incorporating a switching-type transistor and an interrogation pulse generator into the detector, with the respective connections of said elements to the other detector elements being provided. The increase in sensitivity and accuracy in detecting the radiation is achieved in the third variant being claimed due to the action of factors leading to attaining similar technical results in the first variant being claimed. To achieve the preset dynamic range of the radiation intensities to be detected, a capacitor of the required capacitance is connected between the first switching-type transistor electrode and common bus.

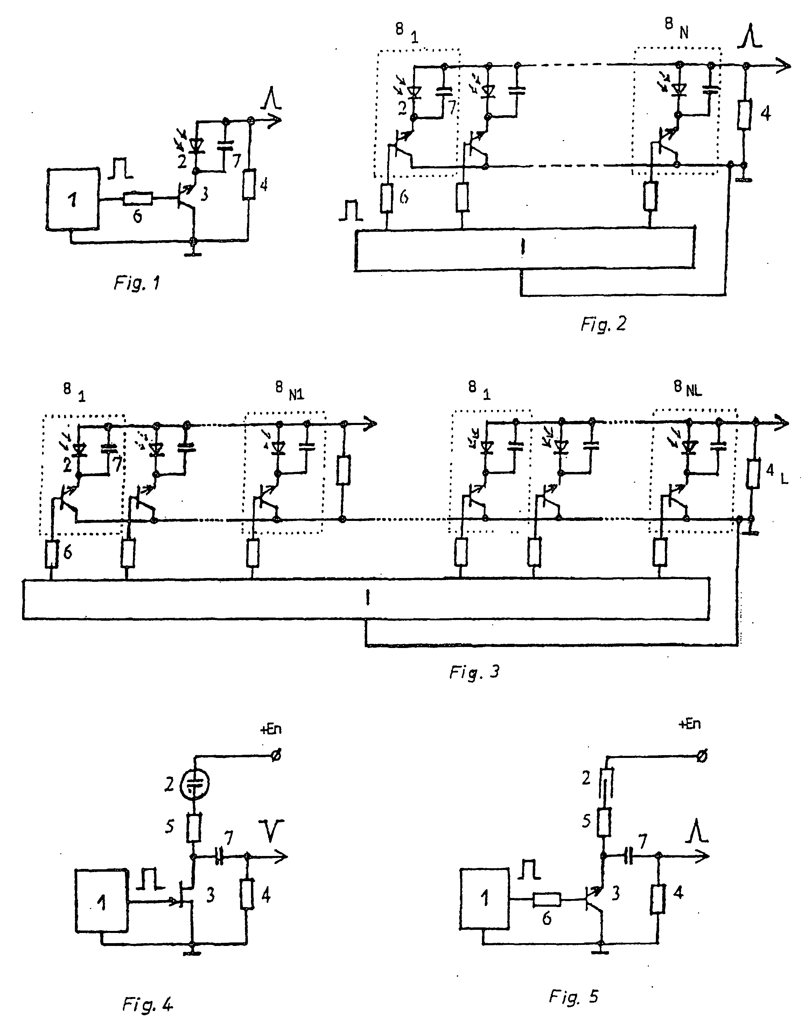

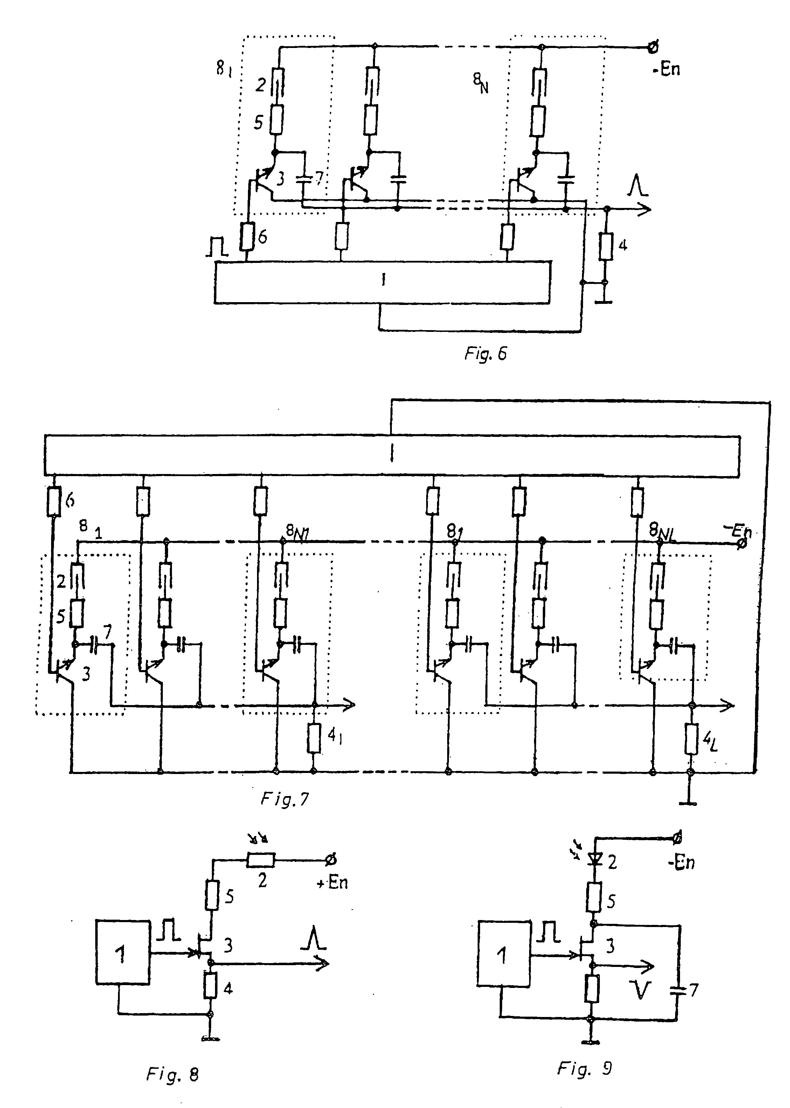

Figs. 1, 2, 3 show three modifications of an electric circuit of the first variant of the radiation detector being claimed that uses photodiodes as sensitive elements. Figs. 4, 5, 6 and 7 show four modifications of an electric circuit of the second variant of the radiation detector being claimed that uses different types of sensitive elements and operates when a bias voltage, including high bias voltage, is supplied thereto. Figs. 8 and 9 show two modifications of an electric circuit of the third variant of the detector being claimed that uses different types of sensitive elements operating when energized by a bias voltage.

A radiation detector being provided comprises an interrogation pulse generator 1, a radiation sensitive element 2 (a photodiode in the first variant of the detector being provided), a switching-type transistor 3 and a load 4. In the second and third variants, the detector may also include a current-limiting resistor 5. In the first detector variant (see Figs. 1, 2, 3) the photodiode 2 and load 4 are series-connected, with the load 4 being coupled through a signal contact with the photodiode 2 and with the common bus at the other side. The second electrode of the photodiode 2 is coupled with the first electrode (for example, emitter) of the switching-type transistor 3; the control electrode (for example, base) is coupled with an output of the interrogation pulse generator 1 through a resistor 6; and the third electrode of the transistor 3 (for example, a collector) is coupled with the common bus. An integrating capacitor 7 may be placed in parallel with the photodiode 2. In the second modification of the first detector variant (see Fig. 2), N groups of 8₁, 8₂,....8_{N} elements, each consisting of the series-connected switching-type transistor 3 and photodiode 2, with which the integrated capacitor 7 may be placed in parallel, is connected across the load 4. Besides, the interrogation pulse generator 1 comprises N outputs, each being connected to the control electrode (base) of the switching-type transistor 3 from the respective group of elements via resistor 6, where N is an integer > 1. In the third modification of the first detector variant (see Fig. 3), L loads 4₁, 4₂,...4_{L} are included, with above-mentioned Nᵢ group of elements being placed in parallel with each i-th load, and the interrogation pulse generator 1 comprising N outputs, the number of which equals the total number of groups of elements in the detector, where L is a positive integer > 1, and Nᵢ is a positive integer.

In the second variant of the detector being provided (see Figs. 4, 5, 6, 7), another types of elements, for example, ionization chambers (see Fig. 4) or ionizing radiation proportional counters (see Fig. 5, 6, 7) may be also used in addition to photodiodes as sensitive elements 2. The first simplest modification of the second variant of the detector being provided (see Figs. 4, 5) includes an interrogation pulse generator 1, a radiation sensitive element 2, a switching-type transistor 3, a load 4, a current-limiting resistor 5 and an integrating capacitor 7. In this case, the radiation sensitive element 2 is coupled with the supply voltage bus at one side and, via the current limiting resistor 5, with the first electrode (for example, a drain region or emitter) of the switching-type transistor 3 and the first plate of the integrating capacitor 7 at the other side, the second plate of the latter being connected to the signal contact of the load 4, the second contact of which is coupled with the common bus. Besides, the output of the interrogation pulse generator 1 is coupled with the control electrode (gate or base) of the switching-type transistor 3. It should be noted, that in case a bipolar transistor serves as the switching-type transistor 3, the resistor 6 is connected between the generator 1 output and transistor 3 base (see Fig. 5). The third electrode (for example, source or collector) of the switching-type transistor 3 is coupled with the common bus. A constant voltage Eₙ of the required polarity and value is supplied to the supply voltage bus. Both field-effect transistors (see Fig. 4) and bipolar transistors (see Fig. 5) may be used as the switching-type transistor 3.

In the second variant of the detector being provided, it is most reasonable to use elements sensitive to various radiation types needing the bias voltage, including high bias voltage, to be supplied for an efficient operation. In the second modification of the second variant of the radiation detector being provided (see Fig. 6), N groups of 8₁, 8₂,....8_{N} elements, each consisting of a series-connected radiation-sensitive element 2 and a switching-type transistor 3, the common point of which being coupled with the signal contact of the load 4 via the integrating capacitor 7, are connected between the- supply voltage bus and common bus. Besides, the interrogation pulse generator 1 comprises N outputs, each being coupled with the control electrode (base) of the switching-type transistor 3 via the resistor 6 from the respective group of elements, where N is an integer > 1. In the third modification of the second radiation detector variant (see Fig. 7) L loads 4₁, 4₂,...4_{L} are included with the signal output of each i-th load is connected to the above-mentioned Nᵢ groups of elements, and the interrogation pulse generator 1 contains N outputs, the number of which equals the total number of groups of elements in the detector, where L is an integer > 1 and Nᵢ is a positive integer.

In the third variant of the radiation detector being provided (see Figs. 8, 9), the other types of sensitive elements 2 requiring a bias voltage supply for an efficient operation, for example, for photoresistors (see Fig. 8), may be also used in addition to photodiodes. The first simplest modification of the third variant of the detector being provided (see Fig. 8) comprises an interrogation pulse generator 1, a radiation-sensitive element 2, a switching-type transistor 3, a load 4 and a current-limiting resistor 5. In this case, the radiation-sensitive element 2 is coupled at one side with the voltage supply bus and at the other side - with the first electrode (for example, drain) of the switching-type transistor 3 via the current-limiting resistor 5. The output of the interrogation pulse generator 1 is coupled with the control electrode (gate) of the switching-type transistor 3, the third electrode of which (for example, source) is coupled with the signal contact of the load 4 connected to the common bus at the other side. A constant voltage Eₙ of the required polarity and value is delivered to the voltage supply bus. The second modification of the third radiation detector variant (see Fig. 9) additionally comprises and integrating capacitor 7, being connected between the first electrode (for example, drain) of the switching-type transistor 3 and common bus. Field-effect transistors, the self-capacitance of which is used as an integrating capacitance in the first modification of said detector variant, may be used as the switching-type transistor 3 only in the third variant of the radiation detector being provided.

The radiation detector provides the interrogation pulse generator 1 being a rectangular voltage-pulse generator. The amplitude and polarity of output voltage pulses are selected to enable the respective detector switching-type transistors thereby. Ring counters, decoders, shift registers and other devices having the number of outputs equaling those of switching-type transistors in the detector and forming the voltage pulses of the required polarity, amplitude and duration on outputs at the respective points of time may be used as the generator 1 in multi-element detector modifications. The generator 1 frequency sets the integrating period of the radiation recorded by the detector and defines the limit of the intensity registered.

The operation of the radiation detector is described below.

The current of the sensitive element 2, when exposed to radiation, integrates at the common capacitance of the sensitive element 2 and paralleled integrating capacitor 7 (see Figs. 1, 2, 3), at the capacitance of the integrating capacitor 7 (see Figs. 4-7), at the self-capacitance of the switching-type transistor 3 and integrating capacitor 7 (see Fig. 9) during the time between interrogations of the transistor 3. An interrogation voltage pulse with polarity activating the transistor 3 is supplied from the generator 1 output to the transistor 3 control electrode at the time the switching-type transistor 3 is being interrogated. As a result of activation of the transistor 3, a current pulse carrying a charge integrated at the capacitor 7 (as well as at the capacitance of the sensitive element 2 or at the capacitance of the transistor 3) through the capacitor 7 and load 4 flows therethrough. While supplying the interrogation pulse, via the load 4 flow interelectrode-capacitance. recharging charges via the capacitance of the sensitive element 2 and/or integrating capacitor 7 (see Figs. 1-7) or directly (see Figs. 8, 9). The charges equal in value, but opposite in sign flow via said circuits upon removing the interrogation parts. As a result, after supplying each interrogation pulse, a total charge flows through the load 4 equaling the charge of said element integrated at the capacitor 7 and/or at the self-capacitance of the sensitive element 2 over the time interval between supplying the interrogation pulse. In case the load 4 is connected between the switching-type transistor 3 and common bus (see Fig. 8, 9), after supplying the interrogation pulse, the charge of the sensitive element 2 integrated at the total capacitance of the capacitor 7 and/or transistor 3 is carried to the load 4. Said charge is proportional to a radiant flux incident on the sensitive element 2 over the time interval between interrogations of the respective switching-type transistor 3.

In multi-element modifications of the detector (see Figs. 2, 3, 6, 7), the interrogation pulse generator 1 is provided with a plurality of outputs, with voltage pulses forming on each of them in a preset sequence. In this case, a serial interrogation of switching-type transistors 3, which are included into the groups of elements 8, corresponding, for example, to a sequential reading out of the respective integrating capacitors 7, is performed, while a sequence of current pulses, displayed as video signals, form at the load 4, when synchronizing clock is added thereto at the respective instant of time. It should be noted that the coordinate of the detector sensitive element is uniquely defined by the number of the load pulse corresponding thereto or by the time said pulse is generated, while the number of radiation particles detected in said sensitive element is defined by the amplitude of the current pulse corresponding thereto. In the detector modifications having plurality of loads (see Figs. 3, 7), the sequence of interrogation current pulses forms serially at each load at time intervals of interrogation of switching-type transistors incorporated into the groups of elements 8 coupled with said load. Availability of a plurality of loads in the detector allows the total number of sensitive elements to be increased in the detector without increasing the noise of amplifier integrating capacitors detecting the readout signals. In addition to the increased radiation detection sensitivity, the capability of the detector being provided to analyze space-energy characteristics of various types of radiation fields to be detected within an extensive intensity range significantly expands functional capacities and application field thereof.

The invention may be used in the fields of nuclear physics, dosimetry, radiation flaw inspection, optics, photometry, crystallography, medicine and other fields of science and engineering.

### References

1. J. Witson. 500 Practical IC-Based Circuits: transl. from English. -M.: Mir, 1992, 278 p., p. 88.
2. V.F. Zolotarev. Vacuumless Analogs of Television Cathode Ray Tubes: -M.: Energia, 1972, 216 p.
3. Semiconductor Image Sensors. Ed. P. Yespers, F. Van de Vile and M. White: transl. from English.-M.: Mir, 1979, 573 p.
4. Charge-Coupled Devices: transl. from English/Ed. D.F. Barb.-M.: Mir, 1982, 240 p.
5. A.P. Tsitovich. Nuclear Electronics.: -M.: Energoatomizdat, 1984, pp.5-33.
6. Yu.V. Zanevsky. Elementary Particle Wire Detectors: --M.: Atomizdat, 1978.
7. R. Klenner. Silicon Detectors. Nuclear Engineering Abroad, 1986, No.6, pp.35-40.

## Claims

1. A radiation detector comprising a photodiode (2) and transistor (3) connected in series, a load (4) and an interrogation pulse generator (1), wherein the load (4) is connected to the photodiode (2) through a signal electrode, and from the other side said load (4) is connected to the common bus, the second photodiode (2) electrode is connected to the first electrode of the transistor (3), the control electrode of which is connected to the output of the interrogation pulse generator (1); and the third transistor (3) electrode is coupled with the common bus; wherein the radiation detector is adapted such that a charge corresponding to a radiant flux incident to the photodiode (2) flows through the load (4), when an interrogation pulse of the interrogation pulse generator (1) is supplied to the control electrode of the transistor (3).

2. A radiation detector according to claim 1, **characterized in that** N groups of elements (8₁,...8_{N}), each consisting of the series-connected photodiode (2) and transistor (3), are placed in parallel with the load (4), and the interrogation pulse generator (1) comprises N outputs, each of the outputs being coupled with the transistor (3) control electrode from the respective group of elements, where N is an integer > 1.

3. A radiation detector according to claim 2, **characterized in that** said detector comprises L loads, with Nᵢ groups of elements being placed in parallel with each i-th load, and the total number of groups of elements contained in said detector equals the number of N outputs of the interrogation pulse generator (1), where L is an integer > 1, Nᵢ is a positive integer.

4. A radiation detector according to claims 1 and/or 2 or 3, **characterized in that** capacitors (7) are connected in parallel with photodiodes (2).

5. A radiation detector comprising a radiation-sensitive element (2) and a load (4), with said sensitive element (2) being connected to a supply voltage bus at one side, and the load being connected to a common bus at one side, wherein said detector additionally comprises a transistor (3), a capacitor (7) and an interrogation pulse generator (1), with the sensitive element (2) being connected to the first electrode of the transistor (3) at the other side and to the first plate of the capacitor (7), the second plate of which is connected to a signal contact of the load (4), and the output of the interrogation pulse generator (1) is coupled with the control electrode of the transistor (3), the third electrode of which is connected to the common bus, wherein the radiation detector is adapted such that a charge corresponding to a radiant flux incident to the radiation-sensitive element (2) flows through the load (4), when an interrogation pulse of the interrogation pulse generator (1) is supplied to the control electrode of the transistor (3).

6. A radiation detector according to claim 5, **characterized in that** N groups of elements, each consisting of the series-connected radiation-sensitive element (2) and a transistor (3), the common point of which is coupled to the load (4) signal output via the capacitor (7), are connected between the supply voltage bus and common bus, and the interrogation pulse generator (1) comprises N outputs, each of the outputs being connected to the transistor (3) control electrode from the respective group of elements, where N is an integer > 1.

7. A radiation detector according to claim 6, **characterized in that** said detector comprises L loads, with a signal contact of each i-th load being connected to Nᵢ groups of elements, and the total number of groups of elements said detector comprises being equal to the number of N outputs of the interrogation pulse generator (1), where L is an integer > 1, Nᵢ is a positive integer.

8. A radiation detector according to claims 5 and/or 6 or 7, **characterized in that** resistors (5) are connected between the sensitive elements and common points of the transistors and capacitors.

9. A radiation detector comprising a radiation-sensitive element (2) and a load (4), with the sensitive element (2) being connected to the supply voltage bus at one side and the load (4) being connected to the common bus at one side, wherein said detector additionally comprises a transistor (3) and an interrogation pulse generator (1), with the sensitive element (2) being connected to the first electrode of the transistor (3) at the other side and the output of the interrogation pulse generator (1) being connected to the control electrode of the transistor (3), the third electrode of which is coupled with the load (4) signal contact, wherein the radiation detector is adapted such that a charge corresponding to a radiant flux incident to the radiation-sensitive element (2) flows through the load (4), when an interrogation pulse of the interrogation pulse generator (1) is supplied to the control electrode of the transistor (3).

10. A radiation detector according to claim 9, **characterized in that** a capacitor (7) is connected between the first transistor (3) electrode and the common bus.

11. A radiation detector according to claim 9 and/or 10, **characterized in that** a resistor (5) is connected between the transistor (3) first electrode and the sensitive element (2).

## Patentansprüche

1. Strahlungsdetektor, welcher eine Photodiode (2) und einen Transistor (3), die in Serie geschaltet sind, eine Last (4) und einen Abfrage-Impulsgeber (1) aufweist, wobei die Last (4) durch eine Signalelektrode hindurch an die Photodiode (2) angeschlossen ist und die Last (4) an der anderen Seite an den gemeinsamen Bus angeschlossen ist, wobei die zweite Elektrode der Photodiode (2) an die erste Elektrode des Transistors (3) angeschlossen ist, wobei die Steuerelektrode davon an den Ausgang des Abfrage-Impulsgebers (1) angeschlossen ist; und wobei die dritte Elektrode des Transistors (3) an den gemeinsamen Bus angeschlossen ist; wobei der Strahlungsdetektor derart eingerichtet ist, dass eine Ladung entsprechend einem auf die Photodiode (2) einfallenden Strahlungsfluss durch die Last (4) hindurchfließt, wenn ein Abfrage-Impuls des Abfrage-Impulsgebers (1) an die Steuerelektrode des Transistors (3) angelegt wird.

2. Strahlungsdetektor gemäß Anspruch 1, **dadurch gekennzeichnet, dass** N Gruppen von Elementen (8₁,...,8_{N}), wobei jede in Serie geschaltet eine Photodiode (2) und einen Transistor (3) aufweist, parallel zu der Last (4) platziert sind, und der Abfrage-Impulsgeber (1) N Ausgänge aufweist, wobei jeder der Ausgänge mit der Steuerelektrode des Transistors (3) aus der jeweiligen Gruppe von Elementen gekoppelt ist, wobei N eine Ganz-Zahl > 1 ist.

3. Strahlungsdetektor gemäß Anspruch 2, **dadurch gekennzeichnet, dass** der Detektor L Lasten aufweist, wobei Nᵢ Gruppen von Elementen parallel zu jeder i-ten Last platziert sind, und dass die Gesamtanzahl von Gruppen von Elementen, welche der Detektor aufweist, der Anzahl an N Ausgängen des Abfrage-Impulsgebers (1) entspricht, wobei L eine Ganz-Zahl >1 ist und Nᵢ eine positive Ganz-Zahl ist.

4. Strahlungsdetektor gemäß den Ansprüchen 1 und/oder 2 oder 3, **dadurch gekennzeichnet, dass** Kondensatoren (7) parallel zu Photodioden (2) angeschlossen sind.

5. Strahlungsdetektor, welcher ein strahlungsempfindliches Element (2) und eine Last (4) aufweist, wobei das empfindliche Element (2) an einer Seite an einen Versorgungsspannungs-Bus angeschlossen ist und die Last an einer Seite an einen gemeinsamen Bus angeschlossen ist, wobei der Detektor zusätzlich einen Transistor (3), einen Kondensator (7) und einen Abfrage-Impulsgeber (1) aufweist, wobei das empfindliche Element (2) an der anderen Seite an die erste Elektrode des Transistors (3) und an die erste Platte des Kondensators (7) angeschlossen ist, wobei die zweite Platte davon an einen Signalkontakt der Last (4) angeschlossen ist und der Ausgang des Abfrage-Impulsgebers (1) an die Steuerelektrode des Transistors (3) gekoppelt ist, wobei die dritte Elektrode davon an den gemeinsamen Bus angeschlossen ist, wobei der Strahlungsdetektor derart eingerichtet ist, dass eine Ladung entsprechend einem auf das strahlungsempfindliche Element (2) einfallenden Strahlungsfluss durch die Last (4) hindurchfließt, wenn ein Abfrage-Impuls des Abfrage-Impulsgebers (1) an die Steuerelektrode des Transistors (3) angelegt wird.

6. Strahlungsdetektor gemäß Anspruch 5, **dadurch gekennzeichnet, dass** N Gruppen von Elementen, wobei jede in Serie geschaltet ein strahlungsempfindliches Element (2) und einen Transistor (3) aufweist, wobei der gemeinsame Knoten davon an den Signalausgang der Last (4) über den Kondensator (7) gekoppelt ist, zwischen dem Versorgungsspannungs-Bus und dem gemeinsamen Bus geschaltet sind und der Abfrage-Impulsgeber (1) N Ausgänge aufweist, wobei jeder der Ausgänge an die Steuerelektrode des Transistors (3) aus der jeweiligen Gruppe von Elementen angeschlossen ist, wobei N eine Ganz-Zahl > 1 ist.

7. Strahlungsdetektor gemäß Anspruch 6, **dadurch gekennzeichnet, dass** der Detektor L Lasten aufweist, wobei ein Signalkontakt von jeder i-ten Last an Nᵢ Gruppen von Elementen angeschlossen ist, und dass die Gesamtanzahl von Gruppen von Elementen, die der Detektor aufweist, der Anzahl an N Ausgängen des Abfrage-Impulsgebers (1) entspricht, wobei L eine Ganz-Zahl >1 ist und Nᵢ eine positive Ganz-Zahl ist.

8. Strahlungsdetektor gemäß den Ansprüchen 5 und/oder 6 oder 7, **dadurch gekennzeichnet, dass** Widerstände (5) zwischen den empfindlichen Elementen und den gemeinsamen Knoten der Transistoren und Kondensatoren geschaltet sind.

9. Strahlungsdetektor, welcher ein strahlungsempfindliches Element (2) und eine Last (4) aufweist, wobei das empfindliche Element (2) an einer Seite an den Versorgungsspannungs-Bus angeschlossen ist und die Last (4) an einer Seite an den gemeinsamen Bus angeschlossen, wobei der Detektor zusätzlich einen Transistor (3) und einen Abfrage-Impulsgeber (1) aufweist, wobei das empfindliche Element (2) an der anderen Seite an der ersten Elektrode des Transistors (3) angeschlossen ist und der Ausgang des Abfrage-Impulsgebers (1) an die Steuerelektrode des Transistors (3) angeschlossen ist, wobei die dritte Elektrode davon mit dem Signalkontakt der Last (4) gekoppelt ist, wobei der Strahlungsdetektor derart eingerichtet ist, dass eine Ladung entsprechend einem auf das strahlungsempfindliche Element (2) einfallenden Strahlungsfluss durch die Last (4) hindurchfließt, wenn ein Abfrage-Impuls des Abfrage-Impulsgebers (1) an die Steuerelektrode des Transistors (3) angelegt wird.

10. Strahlungsdetektor gemäß Anspruch 9, **dadurch gekennzeichnet, dass** ein Kondensator (7) zwischen der ersten Elektrode des Transistors (3) und dem gemeinsamen Bus geschaltet ist.

11. Strahlungsdetektor gemäß den Ansprüchen 9 und/oder 10, **dadurch gekennzeichnet, dass** ein Widerstand (5) zwischen die erste Elektrode des Transistors (3) und dem empfindlichen Element (2) geschaltet ist.

## Revendications

1. Détecteur de rayonnement comprenant une photodiode (2) et un transistor (3) connectés en série, une charge (4) et un générateur (1) d'impulsions d'interrogation, dans lequel la charge (4) est connectée à la photodiode (2) par l'intermédiaire d'une électrode de signal et, à partir de l'autre côté, ladite charge (4) est connectée au bus commun, la seconde électrode de la photodiode (2) est connectée à la première électrode du transistor (3), dont l'électrode de commande est connectée à la sortie du générateur (1) d'impulsions d'interrogation; et la troisième électrode du transistor (3) est couplée au bus commun; dans lequel le détecteur de rayonnement est adapté de telle sorte qu'une charge correspondant au flux rayonnant incident rencontrant la photodiode (2) traverse la charge (4), lorsqu'une impulsion d'interrogation du générateur (1) d'impulsions d'interro-gation est envoyée à l'électrode de commande du transistor (3).

2. Détecteur de rayonnement selon la revendication 1, **caractérisé en ce que** N groupes d'éléments (8₁, ... 8_{N}) constitués chacun par la photodiode (2) et le transistor (3) connectés en série, sont disposés en parallèle avec la charge (4), et le générateur (1) d'impulsions d'interrogation comprend N sorties, chacune des sorties étant couplée à l'électrode de commande du transistor (3) à partir du groupe respectif d'éléments, N étant un entier > 1.

3. Détecteur de rayonnement selon la revendication 2, **caractérisé en ce que** ledit détecteur comprend L charges, Nᵢ groupes d'éléments étant disposés en parallèle avec chaque i-ème charge et le nombre total de groupes d'éléments contenus dans ledit détecteur est égal au nombre de N sorties du générateur (1) d'impulsions d'interrogation, L étant un entier > 1, Ni étant un entier positif.

4. Détecteur de rayonnement selon la revendication 1 et/ou 2 ou 3, **caractérisé en ce que** des condensateurs (7) sont connectés en parallèle à des photodiodes (2).

5. Détecteur de rayonnement comprenant un élément (2) sensible au rayonnement et une charge (4), ledit élément sensible (2) étant connecté à un bus de tension d'alimentation, sur un côté, et la charge étant connectée à un bus commun, sur un côté, dans lequel ledit détecteur comprend en outre un transistor (3), un condensateur (7) et un générateur (1) d'impulsions d'interrogation, l'élément sensible (2) étant connecté à la première électrode du transistor (3), sur l'autre côté, et à la première plaque du condensateur (7), dont la seconde plaque est connectée à un contact de signal de la charge (4) et la sortie du générateur (1) d'impulsions d'interrogation est couplée à l'électrode de commande du transistor (3), dont la troisième électrode est connectée au bus commun, le détecteur de rayonnement étant adapté de telle sorte qu'une charge correspondant à un flux rayonnant incident rencontrant l'élément (2) sensible au rayonnement traverse la charge (4) lorsqu'une impulsion d'interrogation du générateur (1) d'impulsions d'interrogation est envoyée à l'électrode de commande du transistor (3).

6. Détecteur de rayonnement selon la revendication 5, **caractérisé en ce que** N groupes d'éléments, constitués chacun par l'élément (2) sensible au rayonnement connecté en série et un transistor (3), dont le point commun est couplé à la sortie de signal de la charge (4) par l'intermédiaire du condensateur (7), sont connectés entre le bus de tension d'alimentation et le bus commun, et le générateur (1) d'impulsions d'interrogation comprend N sorties, chacune des sorties étant connectée à l'électrode de commande du transistor (3) à partir du groupe respectif d'éléments, N étant un entier > 1.

7. Détecteur de rayonnement selon la revendication 6, **caractérisé en ce que** ledit détecteur comprend L charges, avec un contact de signal de chaque i-ème charge connecté à Nᵢ groupe d'éléments, et le nombre total de groupes d'éléments, que ledit détecteur comporte, étant égal au nombre de N sorties du générateur (1) d'impulsions d'interrogation, L étant un entier > 1, Ni étant un entier positif.

8. Détecteur de rayonnement selon la revendication 5 et/ou 6 ou 7, **caractérisé en ce que** des résistances (5) sont connectées entre les éléments sensibles et les points communs des transistors et des condensateurs.

9. Détecteur de rayonnement comprenant un élément (2) sensible au rayonnement et une charge (4), l'élément sensible (2) étant connecté au bus de tension d'alimentation, d'un côté, et la charge (4) étant connectée au bus commun, d'un côté, dans lequel ledit détecteur comprend en outre un transistor (3) et un générateur (1) d'impulsions d'interrogation, l'élément sensible (2) étant connecté à la première électrode du transistor (3), de l'autre côté, et la sortie du générateur (1) d'impulsions d'interrogation étant connectée à l'électrode de commande du transistor (3), dont la troisième électrode est couplée au contact de signal de la charge (4), et dans lequel, le détecteur de rayonnement étant adapté de telle sorte qu'une charge correspondant à un flux rayonnant incident rencontrant l'élément (2) sensible au rayonnement traverse la charge (4), lorsqu'une impulsion d'interrogation du générateur (1) d'impulsions d'interrogation est envoyée à l'électrode de commande du transistor (3).

10. Détecteur de rayonnement selon la revendication 9, **caractérisé en ce qu'**un condensateur (7) est connecté entre la première électrode du transistor (3) et le bus commun.

11. Détecteur de rayonnement selon la revendication 9 et/ou 10, **caractérisé en ce qu'**une résistance (5) est connectée entre la première électrode du transistor (3) et l'élément sensible (2).
